# EUROPÄISCHE PATENTSCHRIFT

(11) **EP 0 465 934 B1**
(45) Veröffentlichungstag und Bekanntmachung des Hinweises auf die Patenterteilung: **30.11.1994**
(21) Anmeldenummer: 91110610.2
(22) Anmeldetag: 26.06.1991
(51) Int. Cl.: E04C 2/52, H01R 13/74

(54) **Raumzelle**
Building module
Module de bâtiment

(30) Priorität: 30.06.1990 DE 4020960
(43) Veröffentlichungstag der Anmeldung: 15.01.1992
(73) Patentinhaber: JODAG MOBILSYSTEME GMBH, D-89556 Böhmenkirch (DE)
(72) Erfinder: Schmid, Till A., W-7072 Heubach (DE)
(74) Vertreter: Witte, Alexander, Dr.-Ing.

(56) Entgegenhaltungen:
- DE-A- 3 431 424
- FR-A- 2 441 703
- US-A- 4 694 624

## Beschreibung

Die Erfindung betrifft eine Raumzelle mit Wandelementen und mit einem an einem Wandelement angeordneten Anschlußelement für elektrischen Strom, Wasser, Gas oder dergleichen, das eine Anschlußdose umfaßt, die sich in einer Richtung quer zu Oberfläche des Wandelements erstreckt, wobei das Anschlußelement in einer fensterartigen Ausnehmung des Wandelements angeordnet ist, derart, daß die Anschlußdose relativ zur Außenoberfläche des Wandelementes versenkt angeordnet ist, wobei die fensterartige Ausnehmung mit einem ersten Kasten ausgefüllt ist, an dessen Rückwand die Anschlußdose befestigt ist.

Eine derartige Raumzelle ist aus der DE-U-1 995 209 bekannt.

Eine ähnliche Raumzelle ist aus der DE-U-8 900 093 bekannt.

Bei den bekannten Raumzellen ist z.B. eine Steckdose zum Anschluß an ein elektrisches Versorgungsnetz an einer Außenseite eines Wandelementes angeordnet und steht von diesem ab. Infolgedessen besteht die Gefahr, daß beim Transport der Raumzelle die seitlich vorstehende Anschlußdose beschädigt oder gar zerstört wird. Entsprechendes gilt beim Einsatz der Raumzelle, wenn sie z.B. auf einer Baustelle verwendet wird und Baufahrzeuge oder dgl. dicht an der Raumzelle vorbeibewegt werden.

Es ist andererseits auch bekannt, Raumzellen über Kabel oder sonstige Leitungen mit elektrischem Strom o. dgl. zu versorgen, die lose von der Außenseite der Raumzelle zur Innenseite geführt sind, indem entsprechende Öffnungen in Wandelementen vorgesehen werden. Diese Vorgehensweise hat jedoch den Nachteil, daß die genannten Kabel oder Leitungen vor dem Transport der Raumzelle abmontiert werden müssen, und daß mangels eines raumfesten Anschlußpunktes an der Raumzelle Probleme der Betriebssicherheit auftreten können. Im übrigen besteht in diesem Falle auch immer die Gefahr des Abknickens von lose durch eine Wand verlegten Leitungen, und die entsprechenden Durchführungen in der Wand bilden Kältebrücken zwischen dem Außen- und dem Innenraum einer Raumzelle.

Der Erfindung liegt die Aufgabe zugrunde, eine Raumzelle zu schaffen, bei der die nach innen weisenden Verbindungsglieder der Anschlußdose nicht durch Unachtsamkeit im Innenraum der Raumzelle beschädigt werden können und eine gute Wärmeisolierung gewährleistet ist.

Diese Aufgabe wird erfindungsgemäß dadurch gelöst, daß bei einer Raumzelle der eingangs genannten Art noch ein zweiter Kasten vorgesehen ist, der den ersten Kasten von der Innenseite der Raumzelle her umschließt, und dessen Rückwand im horizontalen Abstand von der Rückwand des ersten Kastens angeordnet ist.

Bei der erfindungsgemäßen Raumzelle werden demnach die nach innen weisenden Verbindungsglieder der Anschlußdose durch den zweiten Kasten gekapselt und können daher nicht durch Unachtsamkeit im Innenraum der Raumzelle beschädigt werden. Außerdem hat die genannte zweischalige Anordnung mit Zwei Kästen den Vorteil, daß eine besonders gut isolierende Anordnung entsteht, weil der zwischen den Rückwänden der beiden Kästen eingeschlossene Hohlraum als Wärmeisolierung wirkt.

Bei der versenkten Anordnung der Anschlußdose für den elektrischen Strom, das Wasser, das Gas oder dergleichen ist darüber hinaus die Anschlußdose geschützt, da sie sich innerhalb der Kontur des Wandelementes befindet. Weder beim Transport der Raumzelle noch beim Lagern der Raumzellen dicht nebeneinander, noch beim Zusammenfügen von mehreren Raumzellen zu einem größeren Verbund besteht daher die Gefahr, daß die Anschlußdose beschädigt oder abgerissen wird. Die Anschlußdose kann in der fensterartigen Ausnehmung auch mechanisch sicher angebracht werden, so daß die gesamte innere Versorgung der Raumzelle betriebssicher an die Anschlußdose angeschlossen werden kann.

Insbesondere kann auf diese Weise erreicht werden, daß die Anschlußdose nicht nach außen über eine lichte Außenoberfläche der Raumzelle übersteht oder sogar daß sie nicht nach außen über eine Außenoberfläche des Wandelementes übersteht, sofern eine besonders platzsparende Anordnung gewählt wird.

Bevorzugt ist dabei, wenn die Rückwand im wesentlichen bündig zu einer Innenoberfläche des Wandelementes angeordnet ist.

Ferner kann die Erfindung in weiter bevorzugter Weise noch dadurch ausgebildet werden, daß die Rückwand des ersten Kastens an ihrer Unterseite und die Rückwand des zweiten Kastens an ihrer Oberseite jeweils mit Lüftungsschlitzen versehen sind.

Diese Maßnahme hat den Vorteil, daß der Anschlußkasten für elektrischen Strom oder dgl. zugleich als Lüftungskasten genutzt werden kann, so daß ein Doppelnutzen entsteht, der in mehrerer Hinsicht vorteilhaft ist. So braucht nämlich bei diesem Ausführungsbeispiel der Erfindung die Raumzelle nicht noch mit weiteren Lüftungskästen versehen zu werden, weil die Funktion des Anschlusses der elektrischen Versorgungsleitungen einerseits und die Funktion der Belüftung andererseits durch ein- und dasselbe Element ausgefüllt werden. Die genannte Anordnung der Lüftungsschlitze an der Unterseite der Rückwand des ersten Kastens bzw. an der Oberseite der Rückwand des zweiten Kastens hat darüberhinaus den Vorteil, daß eine zweifach abgewinkelte Luftführung entsteht, die sicherstellt, daß kein Schlagregen durch die Lüftungsschlitze hindurch in den Innenraum der Raumzelle gelangt. Außerdem bewirkt die zweifach abgewinkelte Luftführung, daß ein gewisser Wärmeaustausch für von außen nach innen strömende Luft eintritt, so daß die aus den oberen Schlitzen des zweiten Kastens in den Innenraum der Raumzelle eintretende Frischluft bereits angewärmt ist, was insbesondere bei tiefen Außentemperaturen vorteilhaft sein kann.

Bei einer weiteren Ausführungsform des genannten Ausführungsbeispiels sind Mittel vorgesehen, um ein Ablaufen von Wasser aus dem von den Rückwänden begrenzten Hohlraum zwischen erstem und zweiten Kasten zur Außenseite der Raumzelle zu ermöglichen.

Auch diese Maßnahme hat den Vorteil, daß das Eindringen von Regenwasser, insbesondere bei Schlagregen, in den Innenraum der Raumzelle sicher vermieden wird.

Die genannten Mittel können bei einer Variante der Erfindung als schräger Boden des Hohlraums ausgebildet sein, der in eine Öffnung im ersten Kasten übergeht. Diese Öffnung wird bevorzugt durch die Lüftungsschlitze selbst gebildet, so daß auch diese einen doppelten Nutzen haben.

Die Öffnungen können aber auch durch Kanäle gebildet werden, die in einer unteren Wand des ersten Kastens verlaufen.

Bei weiteren Varianten des genannten Ausführungsbeispiels mit doppelschaliger Ausführung ist der zweite Kasten an einer Innenoberfläche des Wandelementes befestigt.

Diese Maßnahme hat den Vorteil, daß der Wärmeübergang von der Außenseite zur Innenseite des Wandelementes bestmöglich verhindert wird.

Dies gilt insbesondere dann, wenn ein auf der Innenoberfläche aufliegender Rand des zweiten Kastens die Rückwand des ersten Kastens mit Abstand umgibt.

In diesem Falle stellt sich nämlich der Vorteil ein, daß überhaupt keine direkte Verbindung zwischen dem ersten, äußeren Kasten und dem zweiten, inneren Kasten besteht, sondern vielmehr zwischen den beiden Kästen jeweils ein Bereich der Innenoberfläche des Wandelementes verläuft, der üblicherweise aus einem schlecht wärmeleitenden Material (Hartfaserplatte oder dgl.) besteht. In diesem Falle ist es daher auch möglich, den zweiten, inneren Kasten aus einem metallischen Werkstoff (Blech) aufzubauen, was aus Gründen der Robustheit wünschenswert sein kann.

Bei einem anderen Ausführungsbeispiel ist hingegen der zweite Kasten durch die fensterartige Ausnehmung hin durchgeführt und umschließt den ersten Kasten auch seitlich.

In diesem Falle ist zwar der Wärmeübergang von der Außenseite zur Innenseite der Raumzelle besser, die Isolierung also schlechter, das Ausführungsbeispiel hat jedoch den Vorteil, daß das komplette zweischalige Anschlußelement in einem Arbeitsgang von der Außenseite des Wandelementes her montiert werden kann, indem es einfach mit den beiden einander umschliessenden Kästen in die fensterartige Ausnehmung des Wandelementes eingeschoben und fixiert wird.

Weitere Vorteile ergeben sich aus der Beschreibung der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Gesamtansicht eines Ausführungsbeispiels einer erfindungsgemäßen Raumzelle;
- Fig. 2: im vergrößerten Maßstab einen Vertikalschnitt durch ein Wandelement der Raumzelle gemäß Fig. 1 zur Erläuterung von Einzelheiten eines Anschlußelementes;
- Fig. 3: eine Darstellung ähnlich Fig. 2, jedoch für eine Variante der Erfindung;
- Fig. 4: eine weitere Darstellung, ähnlich den Fig. 2 und 3, jedoch nur in einem Ausschnitt, zur Erläuterung eines weiteren Ausführungsbeispiels der Erfindung.

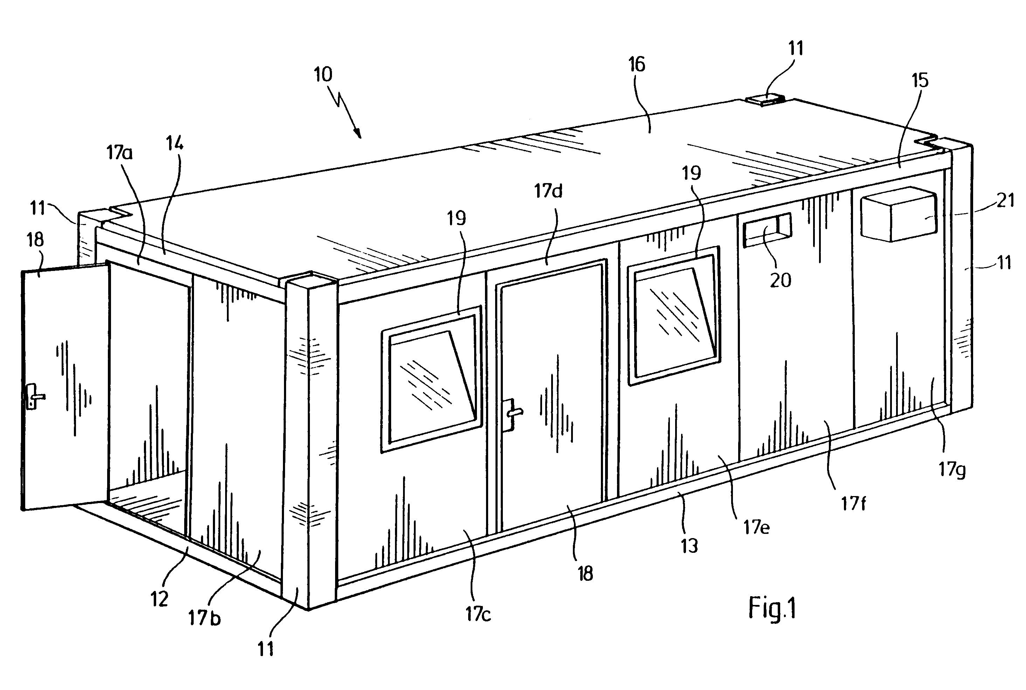

In Fig. 1 bezeichnet 10 als ganzes eine Raumzelle, wie sie z.B. auf Baustellen oder als Behelfs- oder Übergangsunterkunft verwendet werden.

Die im wesentlichen quaderförmige Raumzelle 10 ist an ihren Ecken mit vier Eckpfosten 11 versehen. Die Eckpfosten 11 verbinden Boden-Rahmenprofile 12, 13 mit Decken-Rahmenprofilen 14, 15, so daß ein in sich stabiles, räumliches Fachwerk entsteht.

In die Decken-Rahmenprofile 14, 15 ist eine Decke 16 eingesetzt, während die Boden-Rahmenprofile 12, 13 in entsprechender Weise einen in Fig. 1 nicht näher dargestellten Boden umrahmen.

Zur Ausbildung der Wände der Raumzelle 10 sind Wandelemente 17a - 17g vorgesehen, die an ihrer Unterseite von den Boden-Rahmenprofilen 12, 13 und an ihrer Oberseite von den Decken-Rahmenprofilen 14, 15 gehalten werden.

Die Wandelemente 17a - 17g können unterschiedlich ausgebildet sein. So sind z.B. die in Fig. 1 dargestellten Wandelemente 17a und 17d mit einer Tür 18 versehen, während das Wandelement 17b vollflächig, durchgehend ausgebildet ist. Die Wandelemente 17c und 17e weisen Fenster 19 auf, das Wandelement 17f enthält ein Anschlußelement 20 für die Versorgung mit elektrischem Strom, Wasser, Gas oder dgl., und das Wandelement 17g ist schließlich mit einer Klimaanlage 21 ausgestattet.

Es versteht sich, daß die vorstehende Aufzählung nur Beispielscharakter hat, die Wandelemente 17a - 17g können nämlich in nahezu beliebiger Kombination, teilweise auch mehrfach, zum Aufbau einer Raumzelle 10 eingesetzt werden.

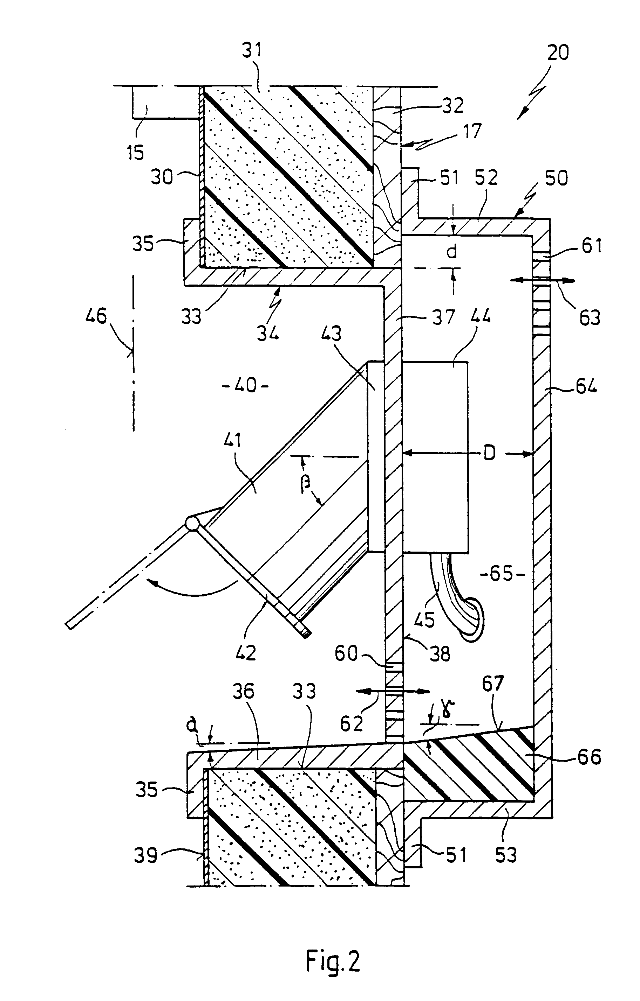

In Fig. 2 ist das Anschlußelement 20 im Vertikalschnitt vergrößert dargestellt. Die nachfolgende Beschreibung orientiert sich dabei an einem Anschlußelement 20 für den Anschluß mit elektrischem Strom, weil dies die häufigste Anschlußart bei Raumzellen 10 der hier interessierenden Art ist. Es versteht sich jedoch, daß das Anschlußelement 20 auch zum Anschluß anderer Leitungen verwendet werden kann, so z.B. zum Anschluß von Kommunikationsleitungen (Telefon, Telex, Telefax, Rundfunk- und Fernsehsignale), zum Anschluß von Gas, Wasser, Druckluft oder dgl. mehr.

Fig. 2 zeigt zunächst, daß jedes Wandelement 17 im wesentlichen dreilagig ausgebildet ist. Die Außenseite der Wandelemente 17 wird durch eine Blechhaut 30 oder andere Materialien gebildet, die eine Hartschaumschicht 31 nach außen wetterfest überdeckt. Die Innenseite der Wandelemente 17 wird durch eine durchgehende Platte 32 gebildet, die vorzugsweise aus Holz oder Hartfaser oder anderen Deckschichten besteht.

In dieses Wandelement 17 ist nun eine fensterartige Ausnehmung 33 eingebracht, in die ein äußerer Kasten 34 eingesetzt ist. Zur Befestigung des äußeren Kastens 34 ist dieser an seinem äußeren Rand mit Umkantungen 35 versehen, die auf der Außenhaut 30 aufliegen und dort z.B. angeschraubt, angeklebt, genietet oder dgl. sein können.

Mit 36 ist eine untere Wand des äußeren Kastens 34 bezeichnet, und der Winkel α deutet an, daß die untere Wand 36 nach außen abschüssig ausgebildet ist, damit Regenwasser dort nach außen ablaufen kann.

Eine Rückwand 37 des äußeren Kastens 34 schließt bündig mit einer gemeinsamen Innenoberfläche 38 von äußerem Kasten 34 und Platte 32 ab.

Mit 39 ist eine Außenoberfläche des Wandelementes 17, nämlich die Außenoberfläche der Außenhaut 30, bezeichnet.

Der vorstehend beschriebene äußere Kasten 34 umschließt somit einen quaderförmigen Raum 40, der von außen zugänglich ist.

Im Raum 40 ist eine Anschlußdose 41 angeordnet, im dargestellten Ausführungsbeispiel eine Elektro-Anschlußdose, deren vorderes Ende mittels eines schwenkbaren Deckels 42 verschließbar ist. Die Anschlußdose 41 ist auf einer Montageleiste 43 angeordnet, die an der Rückwand 37 des äußeren Kastens 34 befestigt ist und/oder diese durchdringt. Auf der Rückseite der Rückwand 37 befindet sich ein zugehöriger Anschlußkasten 44, von dem eine Leitung 45 in weiter nicht dargestellter Weise in den Innenraum der Raumzelle 10 führt. Die Ausbildung der Anschlußdose 41 und des Anschlußkastens 44 im einzelnen soll hier nicht näher beschrieben werden und wird von der vorliegenden Erfindung nicht umfaßt.

Fig. 2 zeigt jedoch deutlich, daß die Anschlußdose 41 um einen Winkel β von beispielsweise 45° nach unten geneigt ist, damit kein Regenwasser in das Innere der Anschlußdose 41 hineingelangen kann.

Fig. 2 zeigt ferner deutlich, daß bei der gewählten Anordnung die Anschlußdose 41 nur geringfügig über die Außenoberfläche 39 des Wandelementes 17 vorsteht, jedenfalls aber innerhalb einer mit 46 bezeichneten lichten Außenoberfläche der Raumzelle 10 bleibt. Die lichte Außenoberfläche 46 der Raumzelle 10 liegt deswegen weiter außen als die lichte Außenoberfläche 39 des Wandelementes 17, weil, wie oben erwähnt, die Wandelemente 17 an den Decken-Rahmenprofilen 15 befestigt, üblicherweise von innen angeschlagen sind. Aus diesem Grunde stehen die Decken-Rahmenprofile 15, die Fig. 2 deutlich zeigt, nach außen über die Wandelemente 17 vor und bilden dort eine weiter außen liegende Außenoberfläche 46. Diese weiter außen liegende Außenoberfläche 46, die auch an der Unterseite der Raumzelle 10 von den Boden-Rahmenprofilen 12, 13 definiert wird, ist jedoch ein wichtiges Maß, wenn Raumzellen 10 nebeneinander gelagert oder aneinander angeschlossen werden, um einen größeren Verbund von Raumzellen zu bilden.

Es ist daher in jedem Falle erforderlich, daß die Anschlußdose 41 nicht über die lichte Außenoberfläche 46 der Raumzelle 10 übersteht; bei etwas konstruktiver Sorgfalt und Wahl einer gedrängten Bauweise kann jedoch auch erreicht werden, daß die Anschlußdose 41 sogar innerhalb der Außenoberfläche 39 der Wandelemente 17 bleibt.

In Fig. 2 ist ferner ein innerer Kasten 50 zu erkennen, der mit Umkantungen 51 auf die Innenoberfläche 38 des Wandelementes 17, d.h. auf die Platte 32, aufgesetzt ist.

Mit 52 ist eine obere Wand und mit 53 eine untere Wand des inneren Kastens 50 bezeichnet.

Man erkennt aus Fig. 2, daß die Anordnung so getroffen ist, daß die Wände 52, 53 mit den Umkantungen 51 die Rückwand 37 des äußeren Kastens 34 im Abstand d allseits umgeben. Auf diese Weise wird erreicht, daß keine direkte Verbindung zwischen den Kästen 34 und 50 besteht, so daß beide Kästen aus Metall gefertigt werden können, ohne daß eine Kältebrücke über die Wand 17 hinweg entsteht. Die beiden Kästen 34 und 50 sind nämlich durch einen umlaufenden Streifen der Breite d aus dem schlecht wärmeleitenden Material der Platte 32 voneinander getrennt.

In Fig. 2 sind ferner Lüftungsschlitze dargestellt, und zwar erste Lüftungsschlitze 60 in der Rückwand 37 des äußeren Kastens 34 sowie zweite Lüftungsschlitze 61 in einer Rückwand 64 des inneren Kastens 50. Mit Pfeilen 62 und 63 ist angedeutet, daß auf diese Weise ein Luftaustausch zwischen dem Außenraum und dem Innenraum der Raumzelle 10 möglich ist. Dieser Luftaustausch führt über den vom inneren Kasten 50 mit der Rückwand 37 des äußeren Kastens 34 definierten Hohlraum 65.

Wenn nun z.B. kalte Außenluft durch die ersten Lüftungsschlitze 60 zunächst in den Hohlraum 65 einströmt, so wird sie zunächst nach oben umgelenkt und strömt an der Rückwand 64 des inneren Kastens 50 vorbei, ehe sie durch die zweiten Lüftungsschlitze 61 in den Innenraum der Raumzelle 10 austritt.

Diese zweifach abgeknickte Luftführung bewirkt einen gewissen Wärmeaustausch, weil die an der Rückwand 64 des inneren Kastens 50 vorbeiströmende Außenluft dort bereits angewärmt wird.

Vor allem erreicht man durch die Anordnung der ersten Lüftungsschlitze 60 an der Unterseite der Rückwand 37 des äußeren Kastens 34 bzw. durch die Anordnung der zweiten Lüftungsschlitze 61 an der Oberseite der Rückwand 64 des inneren Kastens 50, daß kein Schlagregen durch das Anschlußelement 20 hindurch in das Innere der Raumzelle 10 gelangen kann. Selbst wenn Regenwasser unter hohem Winddruck durch die ersten Lüftungsschlitze 60 in den Hohlraum 65 hineingedrückt werden sollte, so ist es praktisch unmöglich, daß das Regenwasser bis nach oben in den Bereich der zweiten Lüftungsschlitze 61 gelangt und von dort in den Innenraum der Raumzelle 10 gelangen kann.

Um nun zu erreichen, daß Regenwasser aus dem Hohlraum 65 wieder abfließen kann, ist oberhalb der unteren Wand 53 ein Bodeneinsatz 66 aus vorzugsweise wärmeisolierendem Material vorgesehen, dessen Oberfläche 67 unter einem Winkel γ geneigt nach außen abfällt. Bei dem in Fig. 2 dargestellten Ausführungsbeispiel mündet die Oberfläche 67 in die ersten Lüftungsschlitze 60, so daß das Regenwasser, nachdem es in den Hohlraum 65 eingedrungen ist, sogleich wieder nach außen abfließen kann.

In Fig. 2 ist schließlich mit D der Abstand der Rückwände 37 und 64 voneinander bezeichnet und man erkennt leicht, daß das Maß D so festgelegt werden kann, daß zum einen der jeweils erforderliche Anschlußkasten 44 im Hohlraum 65 untergebracht werden kann, andererseits aber auch eine Wärmeisolierung durch das Luftpolster im Hohlraum 65 über eine geeignete Wahl des Maßes D eingestellt werden kann.

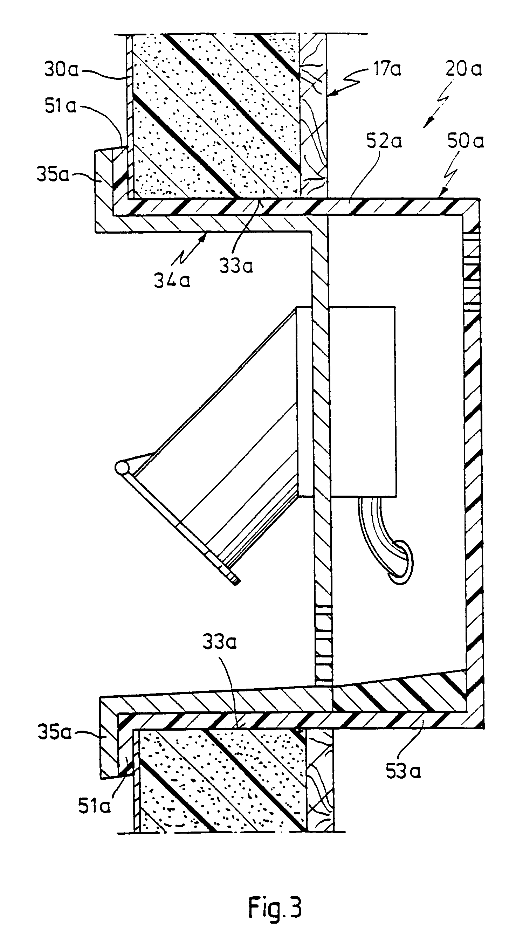

Bei der in Fig. 3 dargestellten Variante sind entsprechende Elemente mit den Bezugszeichen der Fig. 2 versehen, jedoch ist jeweils ein "a" hinzugesetzt worden.

Aus Fig. 3 erkennt man, daß die dort gezeigte Anordnung insoweit von der Anordnung der Fig. 2 abweicht, als der innere Kasten 50a abweichend ausgebildet ist.

Dessen obere bzw. untere Wand 52a, 53a sind nämlich durch die fensterartige Ausnehmung 33a des Wandelementes 17a hindurch nach außen geführt und liegen mit ihren Umkantungen 51a außen auf der Blechhaut 30a auf. Die Umkantungen 35a des inneren Kastens 34a liegen wiederum außen auf den Umkantungen 51a des inneren Kastens 50a auf.

Aus Fig. 3 wird ohne weiteres deutlich, daß die zweischalige Ausführung mit den Kästen 34a und 50a einstückig von der Außenseite des Wandelementes 17a her in die fensterartige Ausnehmung 33a eingeschoben und daher auf sehr einfache Weise montiert werden kann.

Da nunmehr eine sehr innige mechanische Verbindung zwischen den Kästen 34a und 50a besteht, insbesondere der innere Kasten 50a von der Außenseite zur Innenseite der Raumzelle 10 durchgeht, wird man in diesem Falle zumindest den inneren Kasten 50a aus einem wärmeisolierenden Material, beispielsweise aus einem geeigneten Kunststoff, herstellen.

Im übrigen entspricht die Funktion des Anschlußelementes 20a hinsichtlich der Belüftung und Entwässerung vollkommen derjenigen des Anschlußelementes 20 gemäß Fig. 2.

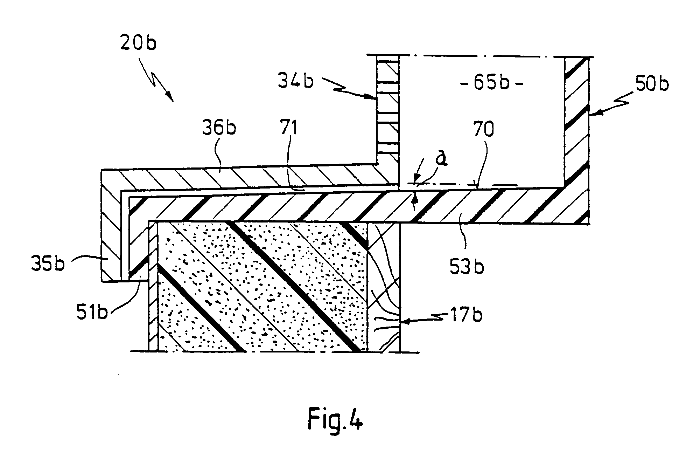

Fig. 4 zeigt schließlich noch eine Variante des Ausführungsbeispiels gemäß Fig. 3, wobei wiederum übereinstimmende Bezugszeichen verwendet wurden, jedoch ein "b" jeweils hinzugesetzt wurde.

Bei der Variante gemäß Fig. 4 ist die untere Wand 53b des inneren Kastens 50b ebenfalls durch das Wandelement 17b durchgehend ausgebildet. Allerdings ist beim Ausführungsbeispiel der Fig. 4 kein Bodeneinsatz (wie mit 66 in Fig. 2 bezeichnet) vorgesehen. Vielmehr ist eine Oberfläche 70 der unteren Wand 53b mit einem Gefälle nach außen versehen, wobei der Gefällewinkel wieder α betragen kann.

Die Oberfläche 70 geht im Bereich des äußeren Kastens 34b in Kanäle 71 über, die in der unteren Wand 36b des äußeren Kastens 34b in ausreichend großer Anzahl nebeneinander ausgebildet sind. Die Kanäle 71 sind im Bereich der Umkantungen 35b bzw. 51b nach unten umgeknickt und münden vertikal am unteren freien Ende der genannten Umkantungen 35b und 51b.

Wenn also Wasser in den Hohlraum 65b eingedrungen ist, so kann es über die Oberfläche 70 und die Kanäle 71 wiederum nach außen abströmen.

## Patentansprüche

1. Raumzelle mit Wandelementen (17) und mit einem an einem Wandelement (17) angeordneten Anschlußelement (20) für elektrischen Strom, Wasser, Gas oder dergleichen, das eine Anschlußdose (41) umfaßt, die sich in einer Richtung quer zur Oberfläche (38, 39) des Wandelementes (17) erstreckt, wobei das Anschlußelement (20) in einer fensterartigen Ausnehmung (33) des Wandelementes (17) angeordnet ist, derart, daß die Anschlußdose (41) relativ zur Außenoberfläche (39) des Wandelementes (17) versenkt angeordnet ist, wobei die fensterartige Ausnehmung (33) mit einem ersten Kasten (34) ausgefüllt ist, an dessen Rückwand (37) die Anschlußdose (41) befestigt ist, dadurch gekennzeichnet, daß ein zweiter Kasten (50) vorgesehen ist, der den ersten Kasten (34) von der Innenseite der Raumzelle (10) her umschließt, und dessen Rückwand (64) im horizontalen Abstand (D) von der Rückwand (37) des ersten Kastens (34) angeordnet ist.

2. Raumzelle nach Anspruch 1, dadurch gekennzeichnet, daß die Anschlußdose (41) nicht nach außen über eine lichte Außenoberfläche (46) der Raumzelle (10) übersteht.

3. Raumzelle nach Anspruch 2, dadurch gekennzeichnet, daß die Anschlußdose (41) nicht nach außen über eine Außenoberfläche (39) des Wandelementes (17) übersteht.

4. Raumzelle nach Anspruch 1, 2 oder 3, dadurch gekennzeichnet, daß die Rückwand (37) im wesentlichen bündig zu einer Innenoberfläche (38) des Wandelementes (17) angeordnet ist.

5. Raumzelle nach einem der Ansprüche 1, bis 4, dadurch gekennzeichnet, daß die Rückwand (37) des ersten Kastens (34) an ihrer Unterseite und die Rückwand (64) des zweiten Kastens (50) an ihrer Oberseite jeweils mit Lüftungsschlitzen (60, 61) versehen sind.

6. Raumzelle nach einem der Ansprüche 1 bis 6, dadurch gekennzeichnet, daß Mittel vorgesehen sind, um ein Ablaufen von Wasser aus dem von den Rückwänden (37, 64) begrenzten Hohlraum (65) zwischen erstem und zweitem Kasten (34, 50) zur Außenseite der Raumzelle (10) zu ermöglichen.

7. Raumzelle nach Anspruch 6, dadurch gekennzeichnet, daß die Mittel als schräger Boden (66, 67; 70) des Hohlraums (65) ausgebildet sind, der in eine Öffnung im ersten Kasten (34) übergeht.

8. Raumzelle nach Anspruch 7, dadurch gekennzeichnet, daß die Öffnung durch die Lüftungsschlitze (60) des ersten Kastens (34) gebildet wird.

9. Raumzelle nach Anspruch 7, dadurch gekennzeichnet, daß die Öffnung durch Kanäle (71) in einer unteren Wand (36) des ersten Kastens (34) gebildet wird.

10. Raumzelle nach einem oder mehreren der Vorhergehenden Ansprüche, dadurch gekennzeichnet, daß der zweite Kasten (50) an einer Innenoberfläche (38) des Wandelementes (17) befestigt ist.

11. Raumzelle nach Anspruch 10, dadurch gekennzeichnet, daß ein auf der Innenoberfläche (38) aufliegender Rand (51) des zweiten Kastens (50) die Rückwand (37) des ersten Kastens (34) mit Abstand (d) umgibt.

12. Raumzelle nach einem oder mehreren der Ansprüche 1 bis 9, dadurch gekennzeichnet, daß der zweite Kasten (50a, 50b) durch die fensterartige Ausnehmung (33) hindurchgeführt ist und den ersten Kasten (34a, 34b) auch seitlich umschließt.

## Claims

1. Room unit having wall elements (17) and having a connection element (20) for electric current, water, gas or the like which is disposed on a wall element (17) and which comprises a connection socket (41) extending in a direction obliquely to the surface (38, 39) of the wall element (17), the connection element (20) being disposed in a window-like recess (33) in the wall element (17) in such a way that the connection socket (41) is disposed countersunk relative to the outer surface (39) of the wall element (17), the window-like recess (33) being filled by a first box (34) to the rear wall (37) of which the connection socket (41) is secured, characterized in that a second box (50) is provided which surrounds the first box (34) from the interior of the room unit (10) and of which the rear wall (64) is disposed at a horizontal spacing (D) from the rear wall (37) of the first box (34).

2. Room unit according to Claim 1, characterized in that the connection socket (41) does not project outwards beyond an open outer surface (46) of the room unit (10).

3. Room unit according to Claim 2, characterized in that the connection socket (41) does not project outwards beyond an outer surface (39) of the wall element (17).

4. Room unit according to Claim 1, 2 or 3, characterized in that the rear wall (37) is disposed substantially flush relative to an inner surface (38) of the wall element (17).

5. Room unit according to any one of Claims 1 to 4, characterized in that ventilation slots (60, 61) are provided respectively at the bottom of the rear wall (37) of the first box (34) and at the top of the rear wall (64) of the second box (50).

6. Room unit according to any one of Claims 1 to 5, characterized in that means are provided for enabling water to drain to the exterior of the room unit (10) from the cavity (65) delimited by the rear walls (37, 64) and between the first and second boxes (34, 50).

7. Room unit according to Claim 6, characterized in that the means are in the form of an inclined base (66, 67; 70) of the cavity (65) which merges into an opening in the first box (34).

8. Room unit according to Claim 7, characterized in that the opening is formed by the ventilation slots (60) in the first box (34).

9. Room unit according to Claim 7, characterized in that the opening is formed by ducts (71) in a lower wall (36) of the first box (34).

10. Room unit according to one or more of the preceding claims, characterized in that the second box (50) is secured to an inner surface (38) of the wall element (17).

11. Room unit according to Claim 10, characterized in that an edge (51), of the second box (50), resting on the inner surface (38) surrounds the rear wall (37) of the first box (34) at a spacing (d).

12. Room unit according to one or more of Claims 1 to 9, characterized in that the second box (50a, 50b) is guided through the window-like recess (33) and also surrounds the first box (34a, 34b) laterally.

## Revendications

1. Module de bâtiment avec des éléments de paroi (17) et avec un élément de raccord (20) placé sur un élément de paroi (17) pour le courant électrique, l'eau, le gaz ou similaire, élément de raccord qui comprend une boîte de raccord (41), qui s'étend dans une direction transversale à la surface (38, 39) de l'élément de paroi (17), l'élément de raccord (20) étant placé dans une découpe (33) en forme de fenêtre de l'élément de paroi (17), de manière que la boîte de raccord (41) soit encastrée par rapport à la surface extérieure (39) de l'élément de paroi (17), la découpe (33) en forme de fenêtre étant remplie avec un premier coffret (34) sur la paroi arrière (37) duquel est fixée la boîte de raccord (41), caractérisé en ce qu'il est prévu un deuxième coffret (50) qui entoure le premier coffret (34) à partir du côté intérieur du module de bâtiment (10) et dont la paroi arrière (64) se trouve à une distance horizontale (D) de la paroi arrière (37) du premier coffret (34).

2. Module de bâtiment selon la revendication 1, caractérisé en ce que la boîte de raccord (41) ne dépasse pas vers l'extérieur d'une surface extérieure (46) libre du module de bâtiment (10).

3. Module de bâtiment selon la revendication 2, caractérisé en ce que la boîte de raccord (41) ne dépasse pas vers l'extérieur d'une surface extérieure (39) de l'élément de paroi (17).

4. Module de bâtiment selon les revendications 1, 2 ou 3, caractérisé en ce que la paroi arrière (37) est sensiblement alignée avec une surface intérieure (38) de l'élément de paroi (17).

5. Module de bâtiment selon l'une des revendications 1 à 4, caractérisé en ce que la paroi arrière (37) du premier coffret (34) est pourvue sur sa face inférieure et la paroi arrière (64) du second coffret (50), sur sa paroi supérieure, de fentes d'aération (60, 61).

6. Module de bâtiment selon l'une des revendications 1 à 6, caractérisé en ce que des moyens sont prévus pour permettre une évacuation de l'eau à l'extérieur de la cavité (65), délimitée par les parois arrière (37, 64), entre le premier et le second coffret (34, 50), vers le côté extérieur du module de bâtiment (10).

7. Module de bâtiment selon la revendication 6, caractérisé en ce que les moyens sont conçus comme un fond (66, 67 ; 70) oblique de la cavité (65), qui se prolonge par une ouverture pratiquée dans le premier coffret (34).

8. Module de bâtiment selon la revendication 7, caractérisé en ce que l'ouverture est formée par les fentes d'aération (60) du premier coffret (34).

9. Module de bâtiment selon la revendication 7, caractérisé en ce que l'ouverture est formée par des canaux (71) pratiqués dans une paroi inférieure (36) du premier coffret (34).

10. Module de bâtiment selon une ou plusieurs des revendications précédentes, caractérisé en ce que le second coffret (50) est fixé sur une surface intérieure (38) de l'élément de paroi (17).

11. Module de bâtiment selon la revendication 10, caractérisé en ce qu'un bord (51), reposant sur la surface intérieure (38) du second coffret (50), entoure la paroi arrière (37) du premier coffret (34), à une distance (d).

12. Module de bâtiment selon une ou plusieurs des revendications 1 à 9, caractérisé en ce que le second coffret (50a, 50b) passe à travers la découpe (33) en forme de fenêtre et entoure le premier coffret (34a, 34b) également latéralement.
